# EUROPEAN PATENT APPLICATION

(11) **EP 4 270 586 A1**
(43) Date of publication of application: **01.11.2023**
(21) Application number: 22904575.2
(22) Date of filing: 02.12.2022
(51) Int. Cl.: H01M 10/058, H01M 10/052

(54) **ELECTRODE ASSEMBLY, MANUFACTURING METHOD THEREFOR, AND LITHIUM SECONDARY BATTERY COMPRISING SAME**

(30) Priority: 06.12.2021 KR 20210172864; 01.12.2022 KR 20220165534
(71) Applicant: LG Energy Solution, Ltd., Seoul 07335 (KR)
(72) Inventor: CHOI, Jin Woo, Daejeon 34122 (KR); CHOI, Eun Seok, Daejeon 34122 (KR)
(74) Representative: Plasseraud IP
(86) International application number: PCT/KR2022/019480
(87) International publication number: WO 2023/106745

(57) **Abstract**

The present disclosure relates to an electrode assembly including a cathode, an anode, and a separator interposed between the cathode and the anode,
wherein the cathode and the anode each have a flat portion where a thickness of an active material layer is constant and an inclined portion where a thickness of an active material layer decreases from the flat portion, and
wherein the inclined portion of the cathode and the inclined portion of the anode are adhered with a separator interposed between them, a manufacturing method thereof, and a lithium secondary battery comprising the same.

## Description

### [TECHNICAL FIELD]

### Cross Citation with Related Application(s)

This application claims the benefit of Korean Patent Application No. 10-2021-0172864 filed on December 6, 2021 and Korean Patent Application No. 10-2022-0165534 filed on December 1, 2022 in the Korean Intellectual Property Office, the entire contents of which are incorporated herein by reference.

The present disclosure relates to an electrode assembly, a manufacturing method thereof, and a lithium secondary battery comprising the same.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Also, in recent years, design of electronic devices has been acted very important elements in product selection by consumers, and the electronic devices have been gradually miniaturized and thinned according to the taste of consumers. Thereby, in order to minimize unnecessary waste of internal space of electronic devices, lithium secondary batteries are also required to be miniaturized and thinned, and the demand for them is increasing.

Such a lithium secondary battery is manufactured by fabricating a cathode and an anode, stacking them together with a separator to form an electrode assembly, and incorporating the electrode assembly together with an electrolyte solution into a secondary battery case.

The electrode of the secondary battery is fabricated by applying an electrode active material slurry to the current collector, and is divided into a coating portion to which the slurry is applied and an non-coating portion to which the slurry is not applied, wherein depending on the coating of the electrode active material slurry, a sliding phenomenon appears in which both ends which are the boundary portion between the coating portion and the non-coating are coated in an inclined manner rather than being physically and perpendicularly coated by the concentration of the slurry or the like.

However, when such a sliding phenomenon appears, the inclined portion allows electrons to move from the current collector according to the charging current, so that lithium ions move from a cathode to an anode. However, the difference in the speed occurs so that the possibility of generation of the lithium precipitation is high, and the distance between the cathode and anode active materials is also farther than other portions, which causes a problem that resistance increases and cell performance deteriorates.

This problem is more serious, especially in the case of fast charging, because the effect of resistance becomes larger.

Therefore, there is an urgent need to develop a secondary battery technology that can solve these problems.

### [DETAILED DESCRIPTION OF THE INVENTION]

### [Technical Problem]

It is an object of the present disclosure to provide a secondary battery in which a portion corresponding to the inclined portion of the active material layer is adhered similarly to a flat portion, thereby controlling the concentration gradient phenomenon due to the distance during lithium occlusion and release to eliminate the resistance unevenness, preventing problems such as lithium precipitation to improve the overall performance of the secondary battery, and securing safety.

### [Technical Solution]

According to one embodiment of the present disclosure, there is provided an electrode assembly comprising a cathode, an anode, and a separator interposed between the cathode and the anode,
wherein the cathode and the anode each have a flat portion where a thickness of an active material layer is constant and an inclined portion where a thickness of an active material layer decreases from the flat portion, and
wherein the inclined portion of the cathode and the inclined portion of the anode are adhered with a separator interposed between them.

Wherein, the electrode assembly may be a bi-cell in which the outermost electrodes on both sides have the same polarity, a full cell in which the outermost electrodes on both sides have different polarities, or a mono-cell including one electrode and one or two separators.

Also, the inclined portion may comprise a first section in which the thickness of the active material layer gradually decreases from the flat portion in an area close to a tab in the extending direction of the tab, or a second section in which the thickness of the active material layer gradually decreases from the flat portion in an area far from the first section and the tab.

A difference between a distance between the cathode and the separator at the inclined portion and a distance between the cathode and the anode at the flat portion may be 0.4 mm or less.

Further, an adhesive strength between the cathode and the anode at the inclined portion may be 30gf/20mm to 100gf/20 mm, and an adhesive strength between the anode and the separator at the inclined portion may be 10 gf/20 mm to 50 gf/20 mm.

Meanwhile, according to another embodiment of the present disclosure, there is provided a method for manufacturing the electrode assembly, the method comprising the steps of:
(a) manufacturing an electrode assembly including a cathode, an anode, and a separator interposed between the cathode and the anode;
(b) laminating the electrode assembly with a pair of first rollers; and
(c) further laminating the resulting laminate with a pair of second rollers at a position corresponding to the inclined portion of the cathode and the inclined portion of the anode, thus adhering the inclined portion of the cathode and the inclined portion of the anode, respectively, with a separator interposed between them.

The pair of first rollers may laminate the electrode assembly in consideration of the thickness of the laminate.

Further, the pair of second rollers may further laminate the electrode assembly, so that an adhesive strength between the cathode and the separator in the inclined portion at the position corresponding to the inclined portion of the cathode and the anode is 30 gf/20 mm to 100 gf/20 mm, and an adhesive strength between the anode and the separator in the inclined portion is 10 gf/20 mm to 50 gf/20 mm.

Moreover, the pair of second rollers may comprise a heating device, and the pair of first rollers may also comprise a heating device.

Wherein, the heating device may apply heat of 40 to 120°C to the electrode assembly.

According to yet another embodiment of the present disclosure, there is provided a lithium secondary battery in which the electrode assembly according to one embodiment of the present disclosure and an electrolyte solution are incorporated into a battery case.

Wherein, two or more electrode assemblies are included, and an additional separator may be included between the two or more electrode assemblies.

At this time, the additional separator is a unit separator, and the two or more electrode assemblies may be laminated with the additional separator interposed between them to form a laminated assembly.

Alternatively, the additional separator is a separation film, and the two or more electrode assemblies may be wound with the separation film to form a wound assembly.

### [BRIEF DESCRIPTION OF THE DRAWINGS]

Fig. 1 schematically illustrates an electrode assembly according to one embodiment of the present disclosure;
Fig. 2 schematically illustrates an electrode assembly according to another embodiment of the present disclosure;
Fig. 3 schematically illustrates a part of a method for manufacturing an electrode assembly according to one embodiment of the present disclosure;
Fig. 4 is a photograph according to Comparative Examples 1 and 2 according to Experimental Example 2 of the present disclosure; and
Fig. 5 is a photograph according to Examples 1 and 2 according to Experimental Example 2 of the present disclosure.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present disclosure is not limited to the embodiments described below.

Hereinafter, the present disclosure will be described in detail with reference to the accompanying drawings. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

According to one embodiment of the present disclosure, there is provided an electrode assembly comprising a cathode, an anode, and a separator interposed between the cathode and the anode,
wherein the cathode and the anode each have a flat portion where a thickness of an active material layer is constant and an inclined portion where a thickness of an active material layer decreases from the flat portion, and
wherein the inclined portion of the cathode and the inclined portion of the anode are adhered with a separator interposed between them.

At this time, the electrode assembly is a unit electrode assembly, which may be a bi-cell in which the outermost electrodes on both sides have the same polarity, for example, a unit electrode assembly having a cathode/separator/anode/separator/cathode or a anode/separator/cathode/separator/anode structure, or may be a full cell in which the outermost electrodes on both sides have different polarities, for example, a unit electrode assembly having a cathode/separator/anode structure, or may be a mono-cell including one electrode and one or two separators. The present disclosure is not limited thereto, and specifically, the outermost electrodes on both sides may be a bi-cell having the same polarity.

Further, the inclined portion may comprise a first section in which the thickness of the active material layer gradually decreases from the flat portion in an area close to a tab in the extending direction of the tab, or a second section in which the thickness of the active material layer gradually decreases from the flat portion in an area far from the first section and the tab.

That is, the inclined portion may be formed at one end where the tab is formed, and the inclined portion may be formed at both one end and the other end.

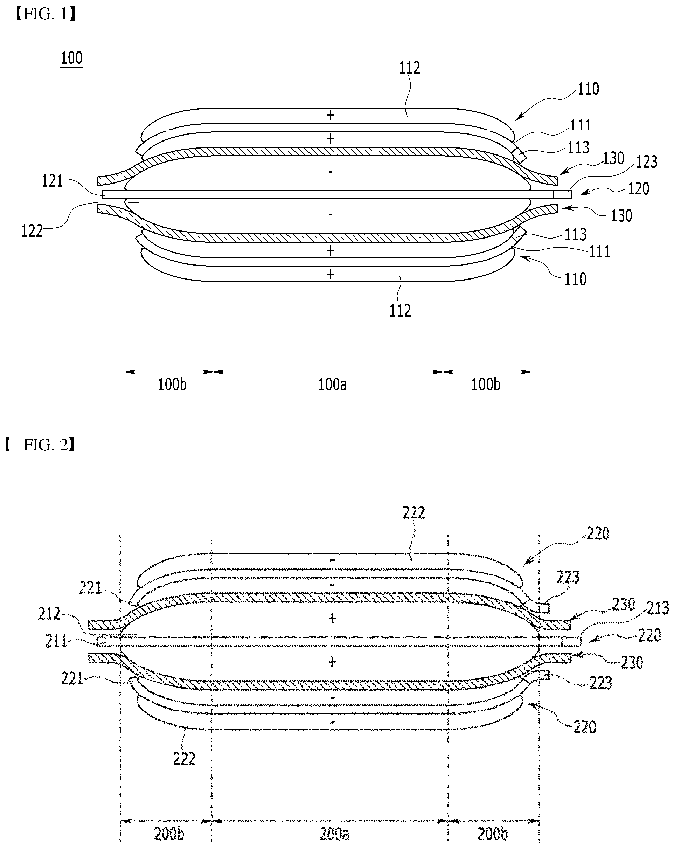

In order to more clearly show such a structure, Fig. 1 schematically shows an electrode assembly 100 in which inclined portions are formed at one end and the other end where tabs are formed according to one embodiment of the present disclosure.

Referring to Fig. 1, the electrode assembly 100 includes two cathodes 110, one anode 120, and two separators 130 interposed between the cathode 110 and the anode 120.

At this time, two cathodes 110 exist on both sides of one cathode 120, respectively.

The cathode 110 and the anode 120 have a flat portion 100a where the active material layers 112 and 122 formed on respective current collectors 111 and 121 is constant in its thickness, and an inclined portion 100b in which the thickness of the active material layer decreases from the flat portion 100a.

At this time, the inclined portion 100b is located in an area close to and far from the tabs 113 and 123 in the extending direction of the tabs 113 and 123 on both sides of the flat portion 100a on the basis of the flat portion 100a.

Conventionally, however, according to a general lamination process due to the difference in thickness from the flat portion, the inclined portions of the cathode and anode cannot contact the separator interposed between them, whereby the distance between the cathode and anode becomes larger and more resistance is applied on the inclined portion.

However, referring to the electrode assembly 100 according to the present disclosure, the inclined portions 100b of the cathode 110 and the anode 120 of the present disclosure are substantially adhered to the separator 130.

Similarly, Fig. 2 schematically shows an electrode assembly 200 in which inclined portions are formed at one end and the other end where tabs are formed according to another embodiment of the present disclosure.

Referring to Fig. 2, the electrode assembly 200 includes one cathode 210, two anodes 220 and two separators 230 interposed between the cathode 210 and the anode 220.

At this time, two anodes 220 exist on both sides of one anode 210, respectively.

The cathode 210 and the anode 220 have a flat portion 200a where the active material layers 212 and 222 formed on the respective current collectors 211 and 221 is constant in its thickness, and an inclined portion 200b in which the thickness of the active material layer decreases from the flat portion 200a.

At this time, the inclined portion 200b is located in an area close to and far from the tabs 213 and 223 in the extending direction of the tabs 213 and 223 on both sides of the flat portion 200a on the basis of the flat portion 200a.

In the electrode assembly 200 of Fig. 2, the inclined portions 200b of the cathode 210 and the anode 220 of the present disclosure are substantially adhered to the separator 230, similarly to the electrode assembly 100 of Fig. 1.

Attachment of the separator to the inclined portion as shown in Figs. 1 and 2 is because a separate lamination process is further performed on the inclined portion, as will be described later.

In this manner, when the cathode and the anode are adhered to the separator at the inclined portion and the separation distance between them is narrowed, it is almost similar to the flat portion and thus, the lithium supply rate is similar and the concentration gradient of lithium ions is not large, so the problem of increased resistance and the problem of lithium deposition can be solved.

In such a structure of the present disclosure, a difference between the distance between the cathode and the anode in the inclined portion and the distance between the cathode and the anode in the flat portion may be 0.4 mm or less, specifically 0.2 mm, and more specifically 50 *µ*m to 100 *µ*m.

That is, according to the present disclosure, the cathode and the anode in the inclined portion are respectively adhered to the separator, so that the distance between them is substantially similar to the distance between the cathode and the anode in the flat portion.

Further, an adhesive strength between the cathode and the separator, which is attached to the separator at the inclined portion, is 30 gf/20 mm to 100 gf/20 mm, and an adhesive strength between the anode and the separator, which is adhered to the separator at the inclined portion, may be 10 gf/20 mm to 50 gf/20 mm.

That is, the cathode and the separator, and the anode and the separator may have adhesive strength equal to or greater than a certain size even at an inclined portion.

Here, when the cathode is located in the center of the manufactured electrode assembly, the adhesive strength is for measuring the adhesive strength between the cathode and the separator, and when the anode is located in the center, it is for measuring the adhesive strength between the anode and the separator.

After the electrode assembly is mounted on a UTM device (LLOYD Instrument LF Plus), a force required to delaminate the electrode assembly from the inclined portion can be measured and obtained by applying a force of 180 degrees at a measurement speed of 10 mm/min.

If the adhesive strength between the cathode and the separator or the adhesive strength between the anode and the separator is too low outside the above range, the distance between the cathode and the anode at the inclined portion gradually increases as the secondary battery including the same is charged and discharged, whereby the effect intended by the present disclosure cannot be sufficiently exhibited. On the other hand, if the adhesion strength is too high, it may damage the cathode or anode and the separator, which is not preferable.

Meanwhile, according to the present disclosure, there is provided a method of manufacturing an electrode assembly, the method comprising the steps of:
(a) manufacturing an electrode assembly including a cathode, an anode, and a separator interposed between the cathode and the anode;
(b) laminating the electrode assembly with a pair of first rollers; and
(c) further laminating the electrode assembly with a pair of second rollers at a position corresponding to the inclined portion of the cathode and the inclined portion of the anode, thus adhering the inclined portion of the cathode and the inclined portion of the anode, respectively, with a separator interposed between them.

That is, the manufacturing method of the electrode assembly according to the present disclosure is started from manufacturing an electrode assembly including a cathode, an anode, and a separator interposed between the cathode and the anode.

Here, the cathode and the anode have a flat portion where the thickness of the active material layer is constant and an inclined portion where the thickness decreases from the flat portion due to a process of applying the slurry on the current collector through a wet process.

Then, the fabricated cathode and anode are laminated with a separator interposed between them.

Here, the materials contained in the cathode and the anode, the manufacturing method, the structure of the separator, etc. are known in the art, and thus, a detailed description thereof is omitted herein.

Here, the electrode assembly may be a unit electrode assembly called a bi-cell or a full cell in the art, as described above. After manufacturing the electrode assembly in this way, a step of laminating the electrode assembly with a pair of first rollers is performed. Furthermore, the present invention further performs a step of further laminating the electrode assembly with a pair of second rollers at a position corresponding to the inclined portion of the cathode and the inclined portion of the anode, thus adhering the inclined portion of the cathode and the inclined portion of the anode, respectively, with a separator interposed between them.

That is, according to the present disclosure, in addition to the lamination for the existing electrode assembly, the portion corresponding to the inclined portion is subjected to further lamination. In this respect, it differs from a conventional technique.

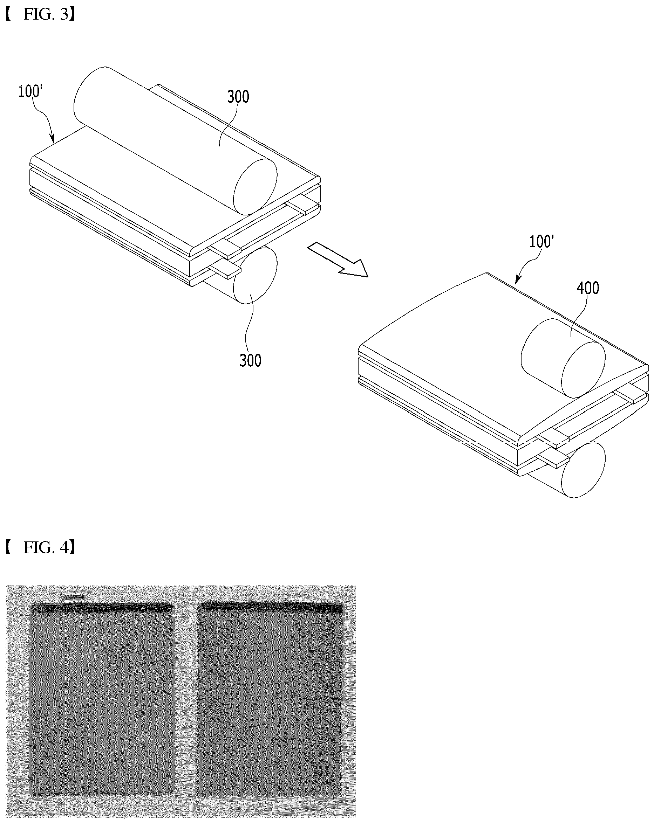

In order to explain the lamination step of such a manufacturing method, Fig. 3 shows a partial schematic diagram of the manufacturing method of the electrode assembly according to the present disclosure.

Referring to Fig 3, the electrode assembly 100' is subjected to a primary lamination with a pair of first rollers 300.

At this time, the pair of first rollers 300 may laminate the electrode assembly in consideration of the thickness of the electrode assembly.

That is, a lamination step is performed to firmly adhere them together with the separator to form one unit.

At this time, lamination is performed with a pair of first rollers 300, and the lamination strength may be set in consideration of the overall thickness of the electrode assembly and the distance between the pair of first rollers 300.

Specifically, the lamination may be performed at a pressure of 5 MPa to 12 MPa.

If lamination is performed under a very low a pressure outside the above range, components of the electrode assembly are not sufficiently adhered, and if lamination is performed under a very high pressure, the components may be damaged, which is not preferable.

In addition, according to the present disclosure, after such lamination, the electrode assembly 100' may be further laminated using a pair of second rollers 400 so that the inclined portions of the cathode and anode are adhered to the separator at positions corresponding to the inclined portions of the cathode and anode.

The lamination, which is first performed by the pair of first rollers 300, is performed in consideration of the overall thickness of the electrode assembly 100', and thus, in the cathode and the anode, the thickness of the active material layer in the portion having the inclined portion is smaller than the thickness of the active material layer in the flat portion, so that sufficient adhesion with the separator interposed between them is not achieved.

Thereby, as described above, the distance between the cathode and the anode increases, and a difference occurs in the speed when lithium ions move from the cathode to the anode, which causes a problem that the possibility of lithium precipitation is high, the resistance increases, and the cell performance also deteriorates.

Thus, according to the present disclosure, a position corresponding to the inclined portion can be subjected to further lamination once again, thereby reducing the distance between the cathode and the anode to a level similar to that of the flat portion.

At this time, the further lamination may be performed so that the adhesive strength between the cathode and the separator at the inclined portion is 30 gf/20 mm to 100 gf/20 mm, and the adhesive strength between the anode and the separator at the inclined portion is 10 gf/20 mm to 50 gf/20 mm.

The further lamination for this purpose can be performed at a pressure of 0.01 MPa to 8 MPa.

If lamination is performed under a very low pressure outside the above range, the cathode and the anode at the inclined portion are not adhered to the separator, and the distance between them may still be wide, and if lamination is performed under a very high a pressure, the components may be damaged, which is not preferred.

Meanwhile, as described above, the further lamination is performed to achieve adhesion to components spaced apart from each other, thus requiring a relatively high-intensity pressure.

However, when further lamination is performed with high-intensity pressure, the possibility of damage to the components such as detachment of the active material, tearing or perforation of the separator, etc. is very high.

Accordingly, the pair of second rollers can include a heating device to reduce such damage and to adhere the cathode and anode to the separator even at the inclined portion.

When lamination is performed while applying heat by the heating device, sufficient lamination is possible even if the pressure is made weaker. Therefore, sufficient adhesive strength between the electrode and the separator can be obtained while reducing physical damage caused by an increase in pressure.

Therefore, similarly in this respect, the pair of first rollers may also further include a heating device.

At this time, the heating device may apply heat of 40 to 120°C to the electrode assembly.

If the temperature is too low outside the above range, it cannot obtain the effect due to addition of heat, and if heat of too high temperature is applied, problems such as shrinkage and melting of the separator, structural change of the active material layer, and change in material state may occur, which is not preferable.

Meanwhile, according to another embodiment of the present disclosure, there is provided a lithium secondary battery in which the electrode assembly and the electrolyte solution are incorporated into a battery case.

Here, the lithium secondary battery includes two or more electrode assemblies, and may have a structure in which an additional separator is included between two or more electrode assemblies.

Specifically, the additional separator is a unit separator, wherein the two or more electrode assemblies may be laminated with an additional separator therebetween to form a laminated assembly, or the additional separator may be a separation film, and the two or more electrode assemblies may be wound with the separation film to form a wound assembly.

That is, the lithium secondary battery according to the present disclosure may include a laminated assembly or a stack-and-folded assembly in which the electrode assembly prepared above is used as a unit electrode assembly.

Other components of the lithium secondary battery are well known in the art, and thus, descriptions thereof are omitted herein.

### <Comparative Example 1 >

LiCoO₂ as a cathode active material, carbon black as a conductive material and PVDF as a binder were mixed at a weight ratio of 97.6: 1.1:1.3 in N-methylpyrrolidone solvent to prepare a slurry for a cathode active material layer. Using a slot die, the slurry for the cathode active material layer was coated onto both surfaces of an aluminum (Al) thin film, which is a cathode current collector having a thickness of 10 *µ*m.

Then, it was dried under vacuum at 130°C for 2.5 hours to form an active material layer. The active material layer thus formed was rolled by a roll pressing method so that the porosity of the flat portion of the active material layer was 17%, to fabricate a cathode having an active material layer.

Artificial graphite as an anode active material, a binder (mixture of SBR and CMC in a weight ratio of 2:1), and carbon black as a conductive material were mixed at a weight ratio of 96.4:0.5:3.1, and the resulting mixture and water as a dispersion medium were used to prepare a slurry for an active material layer in which the mixture and the dispersion medium were mixed at a weight ratio of 1:2. Using a slot die, the slurry for the active material layer was coated onto both surfaces of a copper (Cu) thin film which is an anode current collector with a thickness of 8 *µ*m.

Then, it was dried under vacuum at 130°C for 12 hours to form an active material layer. The active material layer thus formed was rolled by a roll pressing method so that the porosity of the flat portion of the active material layer was 28%, to fabricate an anode having an active material layer.

An A-type bi-cell having a cathode/separator/anode/separator/cathode structure was manufactured using the above-fabricated cathode and anode, and a porous polyethylene separator, and then laminated using a flat press. At this time, lamination was performed under conditions of 100°C and 9.5 MPa.

### <Comparative Example 2>

A C-type bi-cell having an anode/separator/cathode/separator/anode structure was manufactured using the cathode and anode fabricated in Comparative Example 1 and the porous polyethylene separator, and then laminated using a flat press. At this time, lamination was performed under conditions of 100°C and 9.5 MPa.

### <Example 1>

The A-type bi-cell manufactured in Comparative Example 1 was subjected to further lamination once again at a position corresponding to the inclined portions under conditions of 100°C and 5 MPa using a flat press.

### <Example 2>

The C-type bi-cell manufactured in Comparative Example 2 was subjected to further lamination once again at a position corresponding to the inclined portions under conditions of 100°C and 5 MPa using a flat press.

### <Experimental Example 1>

The adhesive strength at the inclined portion of the bi-cells of Comparative Examples 1 and 2 and Examples 1 and 2 was measured.

For the C-type bi-cell, where the cathode is located in the center of the bi-cell, the adhesive strength is for measuring the adhesive strength between the cathode and the separator, and for the A-type bi-cell, in which the anode is located in the center, the adhesive strength is for measuring the adhesive strength between the anode and the separator.

After mounting the bi-cell on UTM equipment (LLOYD Instrument LF Plus), a force was applied at 180 degrees at a measurement speed of 10 mm/min, and the force required to delaminate the separator and the electrode at the inclined portion was measured and obtained, and the results are shown in Table 1 below.

**[Table 1]**

| | Adhesive strength (gf/20mm) |
|---|---|
| Comparative | Not adhered |
| Example 1 | |
| Comparative Example 2 | Not adhered |
| Example 1 | 20 |
| Example 2 | 40 |

### <Experimental Example 2>

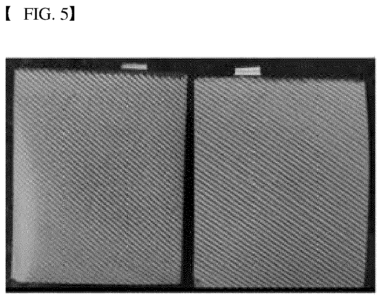

The cathode was separated from the bi-cells manufactured in Comparative Examples 1 and 2 and Examples 1 and 2, and photographs thereof were taken and shown in Figs. 4 and 5 below.

Referring to Figs. 4 and 5, it can be confirmed that the separated cathodes in Comparative Examples of Fig. 4 are not adhered to the separator, so that the transfer of the separator is not performed at the upper end. On the other hand, referring to Fig. 5, it can be confirmed that the separated cathodes in Examples are transferred as a whole.

Although the exemplary embodiments of the present disclosure have been disclosed for illustrative purposes, those skilled in the art will appreciate that various modifications, additions and substitutions are possible, without departing from the scope and spirit of the invention as disclosed in the accompanying claims.

### [Industrial Applicability]

In the electrode assembly according to the disclosure, an inclined portion in which the thickness of the active material layer decreases is separately laminated in an electrode assembly including an cathode, an anode, and a separator, so that a portion corresponding to the inclined portion of the active material layer is adhered to the separator interposed between them in the same manner as the flat portion, which can reduce the distance between the cathode and the anode in the inclined portion, similarly to the flat portion, control the concentration gradient phenomenon due to distance during lithium occlusion and release, and eliminate the resistance unevenness. Therefore, it is possible to improve the overall performance of a secondary battery including the same.

In addition, safety can also be secured by preventing problems such as lithium precipitation, which mainly occurred in the inclined portion.

## Claims

1. An electrode assembly comprising a cathode, an anode, and a separator interposed between the cathode and the anode,
wherein the cathode and the anode each have a flat portion where a thickness of an active material layer is constant and an inclined portion where a thickness of an active material layer decreases from the flat portion, and
wherein the inclined portion of the cathode and the inclined portion of the anode are adhered with a separator interposed between them.

2. The electrode assembly of claim 1, wherein:
the electrode assembly is a bi-cell in which the outermost electrodes on both sides have the same polarity, a full cell in which the outermost electrodes on both sides have different polarities, or a mono-cell including one electrode and one or two separators.

3. The electrode assembly of claim 1, wherein:
the inclined portion comprises a first section in which the thickness of the active material layer gradually decreases from the flat portion in an area close to a tab in the extending direction of the tab, or a second section in which the thickness of the active material layer gradually decreases from the flat portion in an area far from the first section and the tab.

4. The electrode assembly of claim 1, wherein:
a difference between a distance between the cathode and the separator at the inclined portion and a distance between the cathode and the anode at the flat portion is 0.4 mm or less.

5. The electrode assembly of claim 1, wherein:
an adhesive strength between the cathode and the anode at the inclined portion is 30gf/20mm to 100gf/20 mm, and an adhesive strength between the anode and the separator at the inclined portion is 10 gf/20 mm to 50 gf/20 mm.

6. A method for manufacturing the electrode assembly of claim 1, the method comprising the steps of:
(a) manufacturing an electrode assembly including a cathode, an anode, and a separator interposed between the cathode and the anode;
(b) laminating the electrode assembly with a pair of first rollers; and
(c) further laminating the resulting electrode assembly with a pair of second rollers at a position corresponding to the inclined portion of the cathode and the inclined portion of the anode, thus adhering the inclined portion of the cathode and the inclined portion of the anode, respectively, with a separator interposed between them.

7. The method of claim 6, wherein:
the pair of first rollers laminate the electrode assembly in consideration of the thickness of the electrode assembly.

8. The method of claim 6, wherein:
the pair of second rollers further laminate the electrode assembly, so that an adhesive strength between the cathode and the separator in the inclined portion at the position corresponding to the inclined portion of the cathode and the anode is 30 gf/20 mm to 100 gf/20 mm, and an adhesive strength between the anode and the separator in the inclined portion is 10 gf/20 mm to 50 gf/20 mm.

9. The method of claim 6, wherein:
the pair of second rollers comprises a heating device.

10. The method of claim 6, wherein:
the pair of first rollers comprises a heating device.

11. The method of claim 9 or 10, wherein:
the heating device applies heat of 40 to 120°C to the electrode assembly.

12. A lithium secondary battery in which the electrode assembly of claim 1 and an electrolyte solution are incorporated into a battery case.

13. The lithium secondary battery of claim 12, wherein:
two or more electrode assemblies are included, and an additional separator is included between the two or more electrode assemblies.

14. The lithium secondary battery of claim 13, wherein:
the additional separator is a unit separator, and the two or more electrode assemblies are laminated with the additional separator interposed between them to form a laminated assembly.

15. The lithium secondary battery of claim 13, wherein:
the additional separator is a separation film, and the two or more electrode assemblies are wound with the separation film to form a wound assembly.
